# EUROPEAN PATENT SPECIFICATION

(11) **EP 2 753 165 B1**
(45) Date of publication and mention of the grant of the patent: **25.05.2016**
(21) Application number: 12759175.8
(22) Date of filing: 05.09.2012
(51) Int. Cl.: A01D 34/43, A01D 34/44, A01D 34/535

(54) **SELF-PROPELLED CUTTING MACHINE**
SELBSTANTREIBENDE SCHNEIDEMASCHINE
MACHINE DE COUPE AUTOMOTRICE

(30) Priority: 05.09.2011 GB 201115333
(43) Date of publication of application: 16.07.2014
(73) Proprietor: Ransomes Jacobsen Limited, Ipswich, Suffolk IP3 9TT (GB)
(72) Inventor: CLIFFORD, Christian, Ipswich Suffolk IP3 9TT (GB); COMELY, Richard, Ipswich Suffolk IP3 9TT (GB); KENDALL, Adrian, Ipswich Suffolk IP3 9TT (GB); LANSDELL, Tim, Ipswich Suffolk IP3 9TT (GB)
(74) Representative: Garratt, Peter Douglas
(86) International application number: PCT/GB2012/052178
(87) International publication number: WO 2013/034903

(56) References cited:
- WO-A1-91/03926
- WO-A1-2007/038857
- GB-A- 1 518 471
- US-A- 4 631 910
- US-A- 6 082 086
- US-A1- 2005 257 508
- US-A1- 2009 206 576
- US-A1- 2010 186 361
- US-A1- 2011 288 729

## Description

### FIELD OF THE INVENTION

This invention relates to the cutting of grass or similar vegetation and in a particular example is concerned with self-propelled cutting machines.

### BACKGROUND OF THE INVENTION

There are a wide variety of grass cutting machines designed for different applications; types of vegetation and conditions. For higher quality applications such as golf courses and some other sporting or recreational areas, the commonest cutting element is a cylinder having a helical blade, referred to as a reel, which cuts the grass by rotating past a horizontal cutter-bar, thus producing a continuous 'scissor' action. This is best suited to relatively fine grass, which is maintained short and upright. Long or tangled grass tends to be rolled flat rather than cut. A key advantage of this type of cutting element is that grass can be cut to a high degree of accuracy (i.e. to a controllable and uniform height). Large swathes of grass can be cut by having a number of reels attached to the same machine. It is common for these types of cutters to be mounted onto specially designed machines in a variety of different arrangements. One arrangement has three cutting units; one disposed in front of each front wheel of the machine and the other supported centrally beneath the machine. This arrangement enables a characteristic striped appearance to be created, if desired. An example of a grass cutting machine with this arrangement is described in US 2005/0257508

In agricultural or other coarse cutting applications, it is common to use a type of grass cutting unit called a 'flail'. This consists of a number of flail elements which are rotated at high speed. The high inertia of the flail elements makes this type of cutter suitable to cut tall or coarse grass, or thick vegetation. It is common for these cutters to be mounted on or towed by a tractor. Generally, where flail cutting elements are used to cut grass, grassland management factors are key rather than any aesthetic criteria. For example, flail cutters can be used in paddocks to control fast growing and coarse plant species, thereby to promote the growth of more nutritious grass.

Reference is directed to WO 91/03926 which describes a lawn mower comprising a frame and a rotor rotatably journalled to the frame about a horizontal axis and provided with cutting members adapted to co-operate shearingly, on rotation of the rotor, with an edge member provided on the frame, the cutting members being pivotally connected to the rotor

### SUMMARY OF THE INVENTION

According to the present invention there is provided a self propelled cutting machine comprising a chassis; two spaced forward ground engaging means having a common transverse axis; at least one rearward ground engaging means; a propulsion unit acting through either or both of the forward and rearward ground engaging means to propel the cutting machine over ground; and at least three cutting units, each cutting unit comprising a support and a cutting element drivably rotatable within the support about a cutting element axis that is horizontal in cutting use, there being one said cutting unit positioned in use in front of each forward ground engaging means and one said cutting unit positioned in use behind the common transverse axis of the forward ground engaging means so that the three cutting units cut a single swathe; wherein each cutting element comprises a driven shaft extending along said cutting element axis and a plurality of flail elements spaced along the length of the driven shaft and each rotatable with respect to said cutting element axis about a flail element axis that is parallel to and spaced from said axis.

Preferably, each cutting unit positioned in use in front of each forward ground engaging means is mounted on the chassis so as to be liftable into a transport position in which said cutting element axis is closer to vertical than horizontal.

The term ground engaging means is intended to include within its meaning wheels, rollers and their equivalents.

### BRIEF DESCRIPTION OF THE DRAWINGS

These and other aspects of the present invention will become apparent from the following exemplary embodiments that are described with reference to the following figures in which:
Figure 1 is a schematic diagram of a self-propelled cutting machine with cutting units arranged in one configuration;
Figure 2 shows an example flail cutting unit;
Figure 3 shows flail cutting units of Figure 2 being mounted onto the self-propelled cutting machine of the kind shown in Figure 1;
Figure 4 shows a cutting unit attached to a frame by a magnetic connection;
Figure 5 shows the cutting unit connection of Figure 4 with the magnetic connection disconnected;
Figure 6 shows a drive member face which faces a cutting unit in the embodiment of Figure 4;
Figure 7 shows a cutting unit head face which faces the drive member face of Figure 6;
Figure 8 shows a drive member face which faces away from a cutting unit head face in the embodiment of Figure 4; and
Figure 9 shows a front view of the drive member of Figure 4.

### DETAILED DESCRIPTION OF PREFERRED EMBODIMENTS

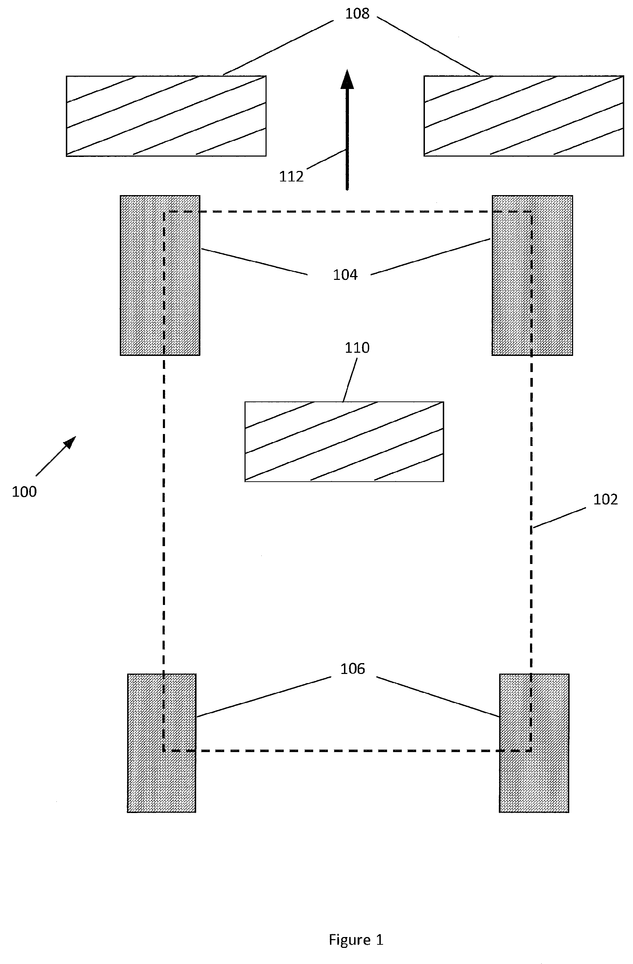

Figure 1 shows a schematic diagram of self-propelled cutting machine configuration. The machine 100 comprises a chassis 102 connected to which are a pair of front wheels 104 and rear wheels 106. A pair of cutting units 108 are situated substantially in front of the two front wheels 104, with a third cutting unit 110 situated substantially between and in front of the two rear wheels 106. This arrangement has a number of advantages compared to other arrangements.

All three cutting units 108, 110 cut grass that has not been flattened by wheels passing over the vegetation beforehand. This means that the vegetation is easier to cut than if a similar arrangement were towed behind the machine for example. The front pair of cutting units 108 are connected to the chassis 100 in such a way as to allow them to be moved from a horizontal position (as shown in Figure 1) to a position more vertical than horizontal. The width of the machine is thus limited by the width of the chassis rather than the width of the extent of the cutting units 108. Therefore, the machine 100 can pass through narrower openings than a machine with a single cutting unit of the same width for example. Furthermore, this second orientation means that the machine can be driven over rough ground, over bumps or be generally transported without damaging the cutting units 108 by moving them into an upright orientation to avoid hitting the ground.

The third cutting unit 110 is supported beneath the chassis 102. It is orientated so as to cut the vegetation which passes in between the first pair of cutting units 108 as the machine 100 moves forward (indicated by arrow 112). The third cutting unit 110 slightly overlaps the first and second cutting units 108 to ensure that a single, continuous swathe of vegetation is cut.

Another advantage of the arrangement shown in Figure 1 is that by using three separate cutting units 108, 110 as opposed to a single unit, greater flexibility in cutting is afforded. For example, a narrower swathe of vegetation may be cut by lifting, or depowering one of the front cutting units 108. This may be useful where damage to the cutting unit could occur, for example, cutting vegetation adjacent to a gravel path. Furthermore, maintenance of the machine 100 is simpler, as if a cutting unit 108,110 is damaged, it would be less expensive to replace or repair it compared to a large single cutting unit.

Although wheels 106, 108 are described, other ground engaging means may be used. For example, continuous (caterpillar) tracks may be preferable if the terrain is steep, or the ground is soft; although there would be a trade-off for speed and mechanical complexity choosing continuous tracks over wheels.

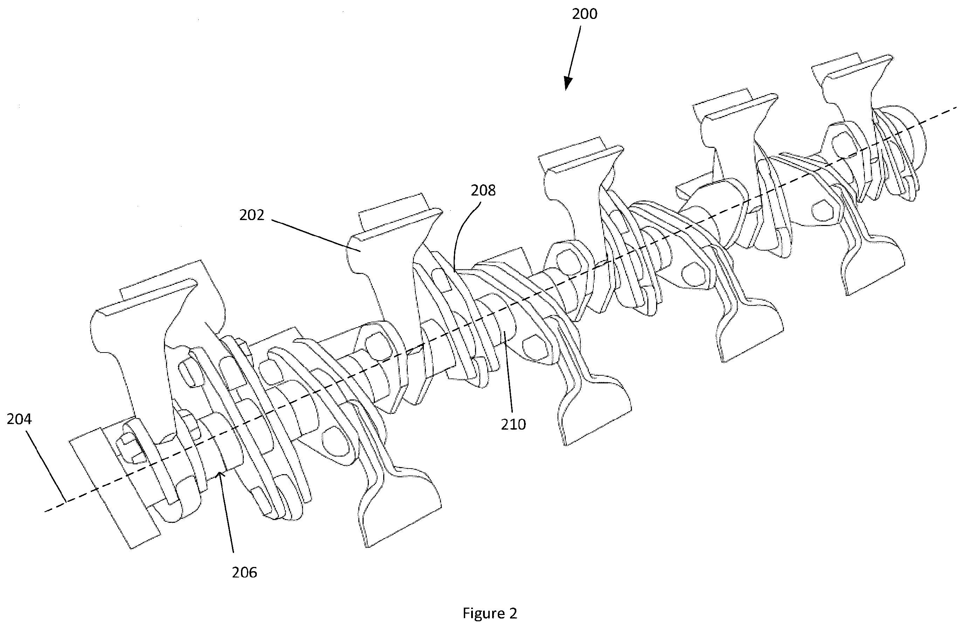

In place of the helical cutting reels that are commonly provided in machines having this configuration, cutting units 108, 110 are provided with cutting elements as shown for example in Figure 2. In a preferred embodiment, it is a feature that the cutting units 108, 110 can be provided with both cutting elements as shown in Figure 2 and conventional reel cutting elements. Both cutting have the same dimensions and use the same fixing means so that they are interchangeable with one another. This feature is described in more detail below.

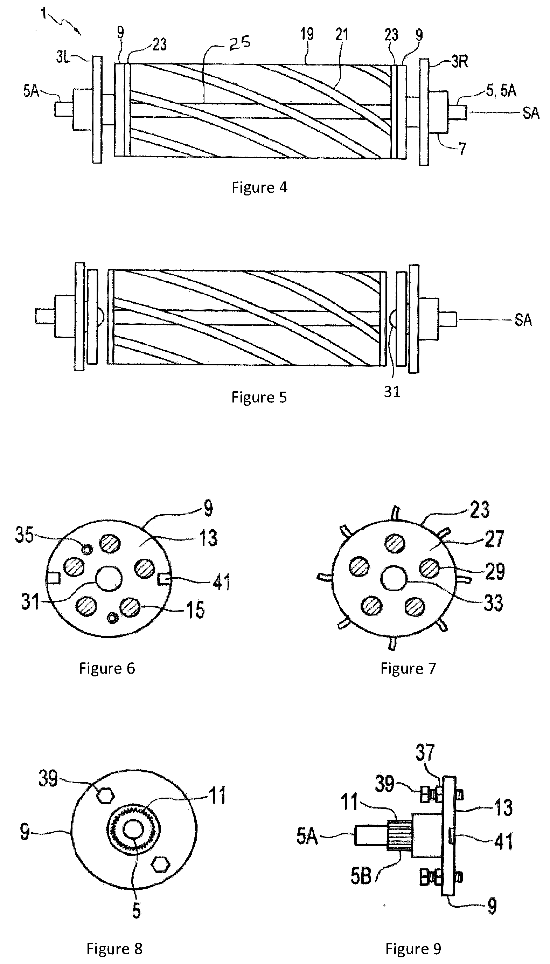

Figure 2 shows an example of a flail cutting unit 200. Flail cutting unit 200 comprises a number of cutters 202 mounted on a shaft 206 for rotation about an axis 204. More specifically, pairs of flanges 208 are sandwiched between spacing collars 210, the flanges being rigidly mounted for rotation as part of the shaft assembly. Each pair of flanges 208 supports a pair of opposed cutters 202, with each cutter being free to rotate about a corresponding bolt which extends between the flanges of the pair. Each cutter is therefore rotatable about an axis parallel to and spaced from the axis 204 of the shaft. Each pair of cutters associated with the same flange are spaced by 180°, and each cutter is spaced by 60° to the cutter on the neighbouring flange. Thus, the cutter spaced three along is in the same orientation. This ensures that the unit is balanced when in use. In use, the shaft 204 is rotated, swinging the cutters 202 into the vegetation. The distal edges of the cutting elements may be slightly sharpened to aid cutting the vegetation, but the high inertia of the cutting elements 202 hitting the vegetation will often suffice. Flail cutting element 200 is adapted to be fitted onto the self-propelled cutting machine 100 described in Figure 100, within any of the three cutting units 108,110. The fitting means is described in detail below and in relation to Figures 4 to 9.

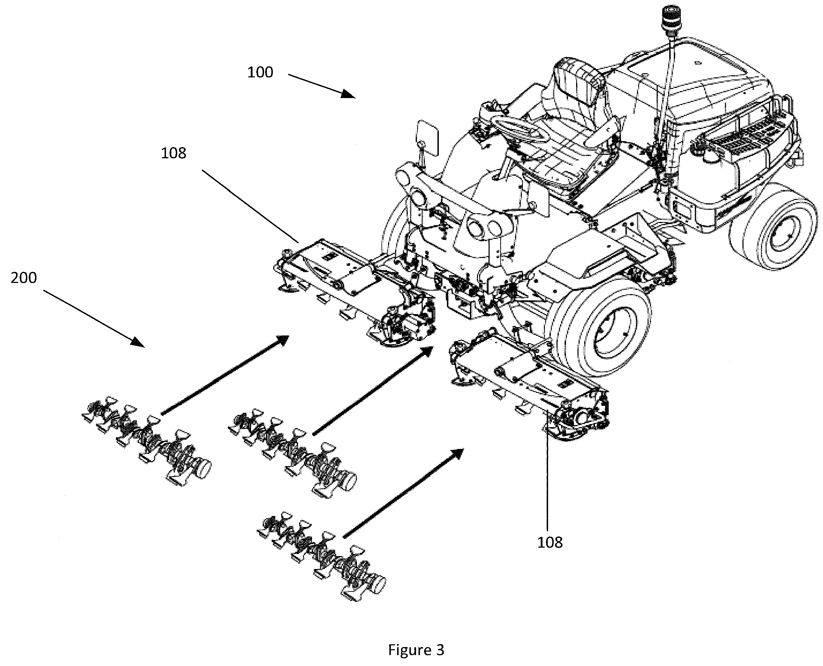

As described above, cutting units 108,110 are adapted to receive interchangeable cutting elements. Figure 3 illustrates three flail cutting units 200 being mounted onto the self-propelled cutting machine 100. In another arrangement reel cutting units may be mounted. Preferably, all three cutting units 108, 110 are of the same type.

The interchangeable feature is afforded in this example by a magnetic connection shown in Figures 4 to 9. Figure 4 shows a cutting unit 19 (in this example, a reel cutter) with an associated assembly. A cutting unit assembly 1 comprises a frame with right and left side plates 3R, 3L, with shaft apertures therethrough. A bearing housing 7 is mounted over each shaft aperture through which a stub shaft 5 extends. This stub shaft 5 engages a bearing in the bearing housing 7 so that the stub shaft 5 and the bearing rotate together. An outer end of the stub shaft 5A is provided outside one of the side plates 3 and is adapted to be rotated about the shaft axis SA. This is preferably achieved by mounting a motor (not shown) on the side plate.

Drive member 9 can move along the shaft axis SA toward or away from bearing housing 7. Figure 9 shows an inner end 5B of a stub shaft 5, located between right and left side plates 3R, 3L. In the example shown in Figure 9, stub shaft 5 is splined so that the drive member 9 engages the splines to rotate with the stub shaft 5, yet can move along the shaft axis SA with respect to the stub shaft 5. Alternatively, the drive member 9 may be fixed with respect to the stub shaft 5, and both move with respect to the bearing housing 7. This movement allows for cutting unit 19 to be removed as described below.

Figure 6 shows the drive face 13 of the drive member 9, which is perpendicular to shaft axis SA. A plurality of magnets 15 are mounted flush onto the drive face 13. Figure 7 shows the corresponding view of the cutting unit head face 23, which also has magnets 29 mounted flush on it. These magnets 29 are at corresponding positions to those of the drive face and are of opposite polarity. This increases the magnetic force between drive face 13 and cutting member head face 23, compared to using just one set of magnets.

In order to properly align the cutting unit 19 onto the shaft axis SA, and to maintain this alignment during operation, a centring bulb 31 is provided which extends outward from the face 13 and into a corresponding recess 33 in the cutting unit head face 23. The bulb 31 and recess 33 are symmetrical about the shaft axis SA so that the cutting unit 19 and stub shaft 5 can rotate with respect to one-another (when not magnetically engaged).

In use, the cutting unit 19 is put in place, then drive plates 9 are moved towards the cutting unit heads 23. After the centring bulb 31 recesses into the recess 33, the magnetic force between magnets 29 and 15 will act to rotate the cutting unit 19 into the correct orientation. The magnets 29, 15 then hold the cutting unit 19 in place with sufficient force as to allow transmission of power to drive the cutting unit 19.

A further advantage of this construction is that it effectively provides a slip-clutch. If the cutting unit 19 strikes an obstruction such as a rock, the magnetic force is overcome, allowing the cutting unit 19 to rotate with respect to the drive plate 9, thus not damaging the cutting unit 19. If this feature is not required, a pin or bolt can be placed through the drive plate 9 into the cutting unit head 23 to hold them rigidly together.

When replacing the cutting unit 19, a mechanism is required to break the magnetic attraction between magnets 15 and 29. Figures 6, 8 and 9 illustrate two of such mechanisms which may be used individually or together. Threaded apertures are provided in on of the faces (for example, by welding a nut 37 over a hole in drive plate 9). A bolt 39 can then be screwed into this, and as it is screwed in, it pushes plates 9 and 23 apart, breaking the magnetic connection and allowing drive plate to be moved along the shaft axis SA away from the cutting unit 19. Alternatively or additionally, grooves 41 are provided at the edges of one or both plates 9, 23 into which a prying instrument can be inserted to pry drive plate 9 away from cutting unit head 23.

Figures 4 and 5 show an embodiment where magnetic coupling occurs at both ends of the cutting unit 19. An alternative is that the cutting unit is magnetically coupled only at one end, and is coupled by slotting onto a stub shaft 5 at the other.

For further details relating to a magnetic coupling device, reference is directed to WO 2007/038857.

Each cutting unit 108, 110 has a motor attached to it to rotate the cutting unit. Depending on the type of cutting unit used, the optimal speed of rotation may be different. For example, for optimal cutting, a reel cutter is rotated at 1000rpm whilst a flail cutter is rotated at 2500rpm. When a cutting unit 108,110 is interchanged with another of a different type, the speed of rotation is preferably altered in order to rotate at the optimal speed. This can be achieved in a number of ways.

In one embodiment, the cutting units 108,110 are driven by means of hydraulic motors and a hydraulic pump. A simple method for changing the rotation of the drive shaft is then to change the flow rate of the hydraulic pump. In the example given above, when using a flail cutter, the flow rate may 3 to 5 and perhaps 2.5 times that when using a reel cutter.

Another method of changing the rotation of the drive shaft would be by using a gearbox. Preferably, each motor would have a gearbox which has at least two speed settings, a low speed when using a reel cutter and a higher speed when using a flail cutter. In the example given above, the gear ratio of the low speed setting to the high speed setting would be 2.5. This gearbox arrangement is of course applicable to both hydraulic and electric motors.

Alternatively, the gearbox may be situated between the hydraulic pump and the engine drive. This allows the engine drive to be run at a different speed to the hydraulic circuit and hence produce the necessary change in rotation speed.

In a further embodiment, instead of replacing the flail cutting element within a cutting unit by a reel cutting element (or vice versa), the entire cutting unit containing the flail cutting element may be replaced by a new cutting unit containing a reel cutting element (or vice versa). There will in such an arrangement be no need for a clutch within the cutting unit and a more robust mounting of the cutting element within the support may be achievable, at the expense of redundancy in the support components. In this arrangement, if a hydraulic motor is provided on each cutting unit, the necessary change in speed of rotation between flail cutting elements and reel cutting elements may be achieved with a hydraulic ratio controller at each cutting unit. In the this way, the same flow rate of hydraulic fluid from the central pump will produce different speeds of rotation in a cutting unit with a flail cutting element than in a cutting unit with a reel cutting element. If appropriate, a mechanical ratio controller could alternatively be employed.

Any reference numerals appearing in the claims are by way of illustration only and shall have no limiting effect on the scope of the claims.

## Claims

1. A self propelled cutting machine comprising a chassis (102); two spaced forward ground engaging means (104) having a common transverse axis; at least one rearward ground engaging means (106); a propulsion unit acting through either or both of the forward and rearward ground engaging means to propel the cutting machine over ground; and at least three cutting units (108, 110), each cutting unit comprising a support and a cutting element drivably rotatable within the support about a cutting element axis that is horizontal in cutting use, there being one said cutting unit (108) positioned in use in front of each forward ground engaging means and one said cutting unit (110) positioned in use behind the common transverse axis of the forward ground engaging means so that the three cutting units cut a single swathe; wherein each cutting element (200) comprises a driven shaft (206) extending along said cutting element axis; **characterised in that** each cutting element has a plurality of flail elements (202) spaced along the length of the driven shaft and each rotatable with respect to said cutting element axis about a flail element axis that is parallel to and spaced from said axis.

2. A cutting machine according to Claim 1, wherein each cutting unit (108, 110) positioned in use in front of each forward ground engaging means (104) is mounted on the chassis (102) so as to be liftable into a transport position in which said cutting element axis is closer to vertical than horizontal.

3. A cutting machine according to Claim 1, wherein each cutting unit (108, 110) comprises a motor mounted on said support for rotating said cutting element (200).

4. A cutting machine according to Claim 3, wherein each cutting unit (108, 110) comprises a clutch providing driving engagement between the motor and the driven shaft, the driven shaft being removable from the cutting unit support.

5. A cutting machine according to Claim 4, wherein said clutch comprises a magnetic clutch (15, 29).

6. A cutting machine according to Claim 4 or Claim 5, further comprising for each cutting unit (108, 110) a replacement cutting element comprising a helical cutting reel, said replacement cutting element being mountable in said support for driven rotation by said motor through said clutch.

7. A cutting machine according to any one of Claim 1 to Claim 3, further comprising for each said cutting unit (108, 110) a respective interchangeable helical cutting unit comprising a support and a cutting element drivably rotatable within the support about a cutting element axis that is horizontal in cutting use, wherein each cutting element comprises a helical cutting reel extending along said cutting element axis.

8. A cutting machine according to Claim 6 or Claim 7, further comprising means for changing the speed of driven rotation of the cutting element from a first higher speed of rotation for a cutting element (200) comprising flail elements (202) to a second lower speed of rotation for a cutting element comprising a helical cutting reel.

## Patentansprüche

1. Schneidemaschine mit Eigenantrieb, die Folgendes umfasst: ein Chassis (102); zwei beabstandete vordere Bodeneingriffsmittel (104), die eine gemeinsame Querachse aufweisen; mindestens ein hinteres Bodeneingriffsmittel (106); eine Antriebseinheit, die über das vordere und/oder hintere Bodeneingriffsmittel wirkt, um die Schneidemaschine auf dem Boden anzutreiben; und mindestens drei Schneideeinheiten (108, 110), wobei jede Schneideeinheit einen Träger und ein Schneidelement umfasst, das in dem Träger um eine Schneidelementachse antriebsfähig und drehbar angeordnet ist, wobei die Schneidelementachse beim Schneideinsatz horizontal angeordnet ist, wobei die genannte Schneideeinheit (108) bei Gebrauch vor jedem vorderen Bodeneingriffsmittel angeordnet ist und die genannte Schneideeinheit (110) bei Gebrauch hinter der gemeinsamen Querachse des vorderen Bodeneingriffsmittels angeordnet ist, so dass die drei Schneideeinheiten eine einzige Schwade schneiden; wobei jedes Schneidelement (200) eine Abtriebswelle (206) umfasst, die sich entlang der genannten Schneidelementachse erstreckt; **dadurch gekennzeichnet, dass** jedes Schneidelement eine Vielzahl von Flegelelementen (202) umfasst, die entlang der Länge der Abtriebswelle beabstandet sind, und wobei jedes in Bezug auf die genannte Schneidelementachse um eine Flegelelementachse drehbar ist, die parallel und beabstandet von der genannten Achse angeordnet ist.

2. Schneidemaschine nach Anspruch 1, wobei jede Schneideeinheit (108, 110) bei Gebrauch vor jedem vorderen Bodeneingriffselement (104) angeordnet ist, das auf dem Chassis (102) angebracht ist, so dass sie in eine Transportposition angehoben werden kann, in der sich die genannte Schneidelementachse mehr in der vertikalen als in der horizontalen Position befindet.

3. Schneidemaschine nach Anspruch 1, wobei jede Schneideeinheit (108, 110) einen Motor umfasst, der zum Drehen des genannten Schneidelements (200) auf dem genannten Träger angebracht ist.

4. Schneidemaschine nach Anspruch 3, wobei jede Schneideeinheit (108, 110) eine Kupplung umfasst, die zwischen dem Motor und der Abtriebswelle einen antreibenden Eingriff bereitstellt, wobei die Abtriebswelle aus dem Träger der Schneideeinheit entnommen werden kann.

5. Schneidemaschine nach Anspruch 4, wobei die genannte Kupplung eine Magnetkupplung (15, 29) umfasst.

6. Schneidemaschine nach Anspruch 4 oder Anspruch 5, die ferner für jede Schneideeinheit (108, 110) ein Ersatzschneidelement umfasst, das eine spiralförmige Schneidtrommel umfasst, wobei das genannte Ersatzschneidelement in dem genannten Träger für eine angetriebene Drehung durch den genannten Motor über die genannte Kupplung angebracht werden kann.

7. Schneidemaschine nach einem der Ansprüche 1 bis 3, die ferner für jede genannte Schneideeinheit (108, 110) eine jeweilige auswechselbare Schraubenschneideeinheit umfasst, die einen Träger und ein Schneidelement umfasst, das in dem Träger um eine Schneidelementachse, die bei dem Schneidvorgang horizontal verläuft, antriebsfähig und drehbar angeordnet ist, wobei jedes Schneidelement eine spiralförmige Schneidtrommel umfasst, die sich entlang der genannten Schneidelementachse erstreckt.

8. Schneidemaschine nach Anspruch 6 oder Anspruch 7, die ferner Mittel umfasst zum Regeln der Drehzahl der angetriebenen Drehung des Schneidelements von einer ersten höheren Drehzahl für ein Schneidelement (200), das Flegelelemente (202) umfasst, auf eine zweite, niedrigere Drehzahl für ein Schneidelement, das eine spiralförmige Schneidtrommel umfasst.

## Revendications

1. Machine de coupe automotrice comprenant un châssis (102) ; deux moyens espacés frontaux de solidarisation avec le sol (104) avec un axe transversal commun ; au moins un moyen arrière de solidarisation avec le sol (106) ; une unité de propulsion agissant par l'intermédiaire soit de l'un des moyens frontaux et arrière de solidarisation avec le sol, soit des deux, pour propulser la machine de coupe au-dessus du sol ; et au moins trois unités de coupe (108, 110), chaque unité de coupe comprenant un support et un élément de coupe apte à tourner par entraînement à l'intérieur du support autour d'un axe d'élément de coupe qui est horizontal lors d'une utilisation de coupe, en ce sens que ladite une unité de coupe (108) est positionnée, en utilisation, devant chaque moyen frontal de solidarisation avec le sol et que ladite une unité de coupe (110) est positionnée, en utilisation, derrière l'axe transversal commun des moyens frontaux de solidarisation avec le sol de sorte que les trois unités de coupe coupent un seul andain ; cas dans lequel chaque élément de coupe (200) comprend un arbre mené (206) lequel s'étend le long dudit axe de l'élément de coupe ; **caractérisé en ce que** chaque élément de coupe possède une pluralité d'éléments à fléaux (202) espacés le long de la longueur de l'arbre mené et chacun étant apte à tourner par rapport audit axe d'élément de coupe autour d'un axe d'élément à fléaux qui est parallèle audit axe, et espacé de ce dernier.

2. Machine de coupe selon la revendication 1, chaque unité de coupe (108, 110) positionnée en utilisation devant chaque moyen frontal de solidarisation avec le sol (104) étant montée sur le châssis (102) de sorte à pouvoir être levée vers une position de transport dans laquelle ledit axe d'élément de coupe est plus proche du plan vertical que du plan horizontal.

3. Machine de coupe selon la revendication 1, chaque unité de coupe (108, 110) comprenant un moteur monté sur ledit support afin de faire tourner ledit élément de coupe (200).

4. Machine de coupe selon la revendication 3, chaque unité de coupe (108, 110) comprenant un embrayage lequel procure un enclenchement par entraînement entre le moteur et l'arbre mené, l'arbre mené étant apte à être enlevé du support d'unité de coupe.

5. Machine de coupe selon la revendication 4, ledit embrayage comprenant un embrayage magnétique (15, 29).

6. Machine de coupe selon la revendication 4 ou la revendication 5, comprenant en outre pour chaque unité de coupe (108, 110) un élément de coupe de remplacement comprenant un rouleau de coupe hélicoïdal, ledit élément de coupe de remplacement pouvant être monté dans ledit support pour une rotation menée par ledit moteur par l'intermédiaire dudit embrayage.

7. Machine de coupe selon l'une quelconque des revendications 1 à 3, comprenant en outre pour chacune desdites unités de coupe (108, 110) une unité de coupe hélicoïdale interchangeable respective comprenant un support et un élément de coupe apte à tourner par entraînement à l'intérieur du support autour d'un axe d'élément de coupe qui est horizontal lors d'une utilisation de coupe, cas dans lequel chaque élément de coupe comprend un rouleau de coupe hélicoïdal lequel s'étend le long dudit axe d'élément de coupe.

8. Machine de coupe selon la revendication 6 ou la revendication 7, comprenant en outre des moyens pour changer la vitesse de rotation menée de l'élément de coupe à partir d'une première vitesse de rotation plus élevée pour un élément de coupe (200) comportant des éléments à fléaux (202) vers une deuxième vitesse de rotation plus faible pour un élément de coupe comportant un rouleau de coupe hélicoïdal.
